# EUROPÄISCHE PATENTSCHRIFT

(11) **EP 2 951 891 B1**
(45) Veröffentlichungstag und Bekanntmachung des Hinweises auf die Patenterteilung: **15.03.2017**
(21) Anmeldenummer: 14701387.4
(22) Anmeldetag: 27.01.2014
(51) Int. Cl.: H01R 13/447, H01R 13/639, H01R 13/64, H05K 5/02

(54) **HOCHVOLTANORDNUNG**
HIGH-VOLTAGE ARRANGEMENT
SYSTÈME À HAUTE TENSION

(30) Priorität: 01.02.2013 DE 102013201674
(43) Veröffentlichungstag der Anmeldung: 09.12.2015
(73) Patentinhaber: Robert Bosch GmbH, 70442 Stuttgart (DE)
(72) Erfinder: GALAMBOS, Szilard, H-9317 Szany (HU); NAGY KOSZEGHY, Gergely, H-1083 Budapest (HU)
(86) Internationale Anmeldenummer: PCT/EP2014/051462
(87) Internationale Veröffentlichungsnummer: WO 2014/118100

(56) Entgegenhaltungen:
- DE-A1-102010 001 411
- DE-C- 614 730
- US-A- 3 141 713
- US-A1- 2009 197 463
- US-B1- 7 207 812

## Beschreibung

### Stand der Technik

Die vorliegende Erfindung betrifft eine Hochvoltanordnung, beispielsweise einen Pulswechselrichter, vorzugsweise für ein Kraftfahrzeug.

Der Stand der Technik kennt verschiedene Gehäuse, in denen eine Leistungselektronik untergebracht ist. An dem Gehäuse ist meist ein Hochvoltstecker ausgebildet. An diesem Hochvoltstecker wird ein Hochvoltgegenstecker angeschlossen. Für die Wartung oder Reparatur ist eine Abdeckung des Gehäuses demontierbar angeordnet. Dabei muss stets sichergestellt werden, dass die Leistungselektronik spannungsfrei bzw. ausgeschaltet ist, wenn die Abdeckung demontiert ist. Der Stand der Technik kennt unterschiedliche Systeme, beispielsweise Sensoren, zum Erfassen einer geöffneten Abdeckung und somit zum Spannungslosschalten bzw. Ausschalten der Leistungselektronik.

Das Dokument US 3 141 713 A offenbart eine Hochvoltanordnung gemäß Präambel vom Anspruch 1.

### Offenbarung der Erfindung

Die erfindungsgemäße Hochvoltanordnung mit den Merkmalen des Anspruchs 1 zeigt ein kostengünstiges und wartungsarmes System zum Sicherstellen, dass die Leistungselektronik nur bei geschlossener Abdeckung unter Spannung steht oder eingeschaltet ist. Dies wird erreicht durch eine Hochvoltanordnung, vorzugsweise für ein Kraftfahrzeug, umfassend ein Gehäuse und einen am Gehäuse angeordneten Hochvoltstecker. Das Gehäuse ist insbesondere zur Aufnahme einer Leistungselektronik, beispielsweise für einen Pulswechselrichter, ausgebildet. Der Hochvoltstecker dient zum Einstecken eines Hochvoltgegensteckers. Die Hochvoltanordnung umfasst des Weiteren eine am Gehäuse montierbare und demontierbare Abdeckung. Im demontierten Zustand der Abdeckung ist das Gehäuse zumindest teilweise offen, so dass die potentielle Gefahr besteht, dass Servicepersonal mit der unter Hochspannung stehenden Leistungselektronik in Berührung kommt. Im Rahmen dieser Erfindung wird von einer demontierten Abdeckung gesprochen, wenn die Abdeckung vollständig vom Gehäuse entfernt ist oder beispielsweise nur aufgeklappt ist. Die Hochvoltanordnung umfasst des Weiteren eine Federvorrichtung mit zumindest einem ersten Federelement. Das erste Federelement ist so angeordnet, dass es von der montierten Abdeckung niedergedrückt wird. Wenn die Abdeckung nicht montiert ist, blockiert das erste Federelement ein Einstecken des Hochvoltgegensteckers. Bei nicht montierter Abdeckung stößt somit der Hochvoltgegenstecker an das erste Federelement, noch bevor der elektrisch leitende Kontakt zwischen dem Hochvoltstecker und dem Hochvoltgegenstecker hergestellt werden kann. Durch die Montage der Abdeckung wird das erste Federelement niedergedrückt, so dass der Hochvoltgegenstecker einsteckbar ist. Es bedarf erfindungsgemäß also keiner aufwendigen Sensorik zum Erfassen der Position der Abdeckung. Sobald die Abdeckung montiert ist, ist das erste Federelement niedergedrückt und der Hochvoltgegenstecker kann eingesteckt werden. Der Hochvoltstecker dient zur Verbindung der Leistungselektronik im Gehäuse mit einer Hochvoltquelle oder mit einem Hochvoltverbraucher. Insbesondere wenn über den Hochvoltstecker ein Hochvoltverbraucher angeschlossen ist, umfass der Hochvoltstecker ein Leitungspaar (auch: Pilotkabelpaar), das mit dem Hochvoltgegenstecker kurzgeschlossen wird. Dadurch kann auf einfache Weise das Ein- und Ausstecken des Hochvoltgegensteckers erkannt werden.

Die Unteransprüche zeigen bevorzugte Weiterbildungen der Erfindung.

Bevorzugt ist vorgesehen, dass das erste Federelement an einem freien Ende einen Haken umfasst. Dieser Haken ist insbesondere U-förmig gebogen. Der Haken dient als Anschlag für den Hochvoltgegenstecker und somit zum Blockieren des Hochvoltgegensteckers.

Die Federvorrichtung umfasst bevorzugt zumindest zwei erste Federelemente. Die beiden ersten Federelemente sind unabhängig voneinander bewegbar, werden jedoch von der Abdeckung gleichzeitig niedergedrückt. Vorteil dieser beiden unabhängig voneinander bewegbaren ersten Federelemente ist, dass eine Manipulation weitgehend ausgeschlossen werden kann, da beide erste Federelemente gleichzeitig mit der Hand niedergedrückt werden müssten, um den Hochvoltgegenstecker ohne einer montierten Abdeckung einzustecken.

Die Federvorrichtung umfasst zumindest ein zweites Federelement. Das zweite Federelement ist so angeordnet, dass es die montierte Abdeckung blockiert. Die Abdeckung kann somit nur durch eine Betätigung des zweiten Federelementes demontiert werden. Zur Demontage der Abdeckung wird das zweite Federelement manuell, beispielsweise per Hand, betätigt. Nach dem Abziehen des Hochvoltgegensteckers kann die Leistungselektronik im Gehäuse für wenige Sekunden noch unter Spannung stehen. Die Verwendung des zweiten Federelementes stellt sicher, dass die Demontage der Abdeckung zumindest ein paar Sekunden in Anspruch nimmt.

Die Federvorrichtung ist insbesondere ein Stanz-Biegeblechteil. Besonders bevorzugt wird die gesamte Federvorrichtung einstückig gefertigt.

Des Weiteren ist bevorzugt vorgesehen, dass der Hochvoltstecker zum Einstecken des Hochvoltgegensteckers in einer Einsteckrichtung angeordnet ist. Die Federvorrichtung umfasst zumindest eine Abstützwand zum Blockieren einer Bewegung der montierten Abdeckung. Die Abstützwand ist so angeordnet, dass eine Bewegung der montierten Abdeckung entgegen der Einsteckrichtung blockiert ist. Insbesondere, wenn die Abdeckung mittels eines einfachen Scharniers, beispielsweise einer Öse, in die eine Lippe einsteckt ist, montiert wird, wird durch die Abstützwand sichergestellt, dass die Abdeckung nur gekippt, jedoch nicht abgezogen werden kann.

Des Weiteren umfasst die Federvorrichtung bevorzugt seitliche Schutzwände. Diese seitlichen Schutzwände stellen sicher, dass das zumindest eine erste Federelement relativ schlecht zugänglich ist, so dass eine Manipulation vermieden wird.

Die Abdeckung umfasst bevorzugt einen Bügel, der den Hochvoltgegenstecker umgreift. Dieser Bügel stellt sicher, dass die Abdeckung bei eingestecktem Hochvoltgegenstecker nicht demontiert werden kann, da der Hochvoltgegenstecker den Bügel der Abdeckung blockiert. Gleichzeitig wird dieser Bügel im Rahmen der Erfindung zum Niederdrücken des ersten Federelementes genutzt.

Die Abdeckung ist vorzugsweise mittels eines Scharniers mit dem Gehäuse verbunden.

### Kurze Beschreibung der Zeichnungen

Nachfolgend wird ein Ausführungsbeispiel der Erfindung unter Bezugnahme auf die begleitende Zeichnung im Detail beschrieben. Dabei zeigen:
- Figur 1: eine erfindungsgemäße Hochvoltanordnung gemäß einem Ausführungsbeispiel mit montierter Abdeckung,
- Figur 2: die erfindungsgemäße Hochvoltanordnung gemäß dem Ausführungsbeispiel ohne Abdeckung,
- Figur 3: eine Schnittansicht der erfindungsgemäßen Hochvoltanordnung gemäß dem Ausführungsbeispiel,
- Figur 4: eine weitere Schnittansicht der erfindungsgemäßen Hochvoltanordnung gemäß dem Ausführungsbeispiel, und
- Figur 5: eine Federvorrichtung der erfindungsgemäßen Hochvoltanordnung gemäß dem Ausführungsbeispiel.

### Ausführungsform der Erfindung

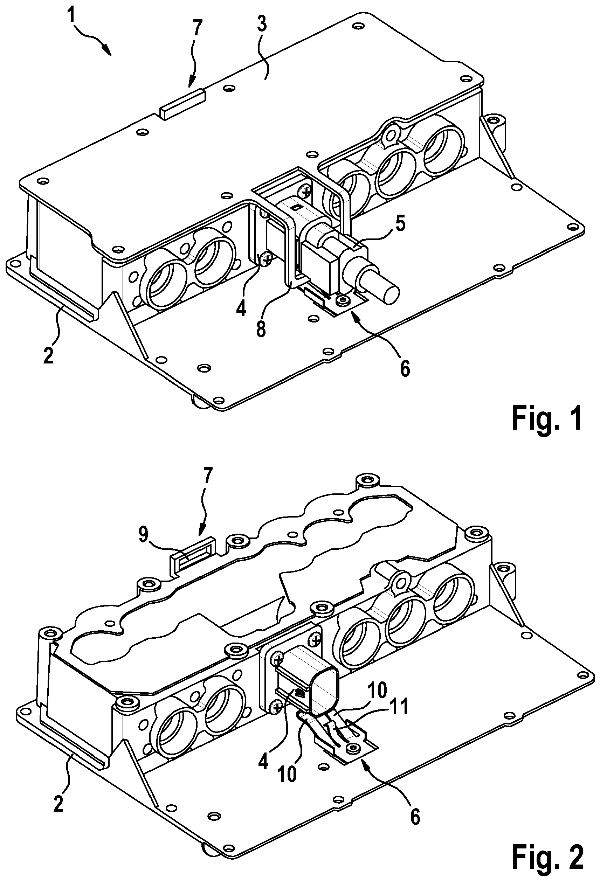

Im Folgenden wird eine Hochvoltanordnung 1 gemäß einem Ausführungsbeispiel anhand der Figuren 1 bis 5 im Detail beschrieben.

Gemäß Figur 1 umfasst die Hochvoltanordnung 1 ein Gehäuse 2, das mittels einer Abdeckung 3 verschlossen ist. An dem Gehäuse 2 ist ein Hochvoltstecker 4 ausgebildet. Dieser Hochvoltstecker 4 dient zum Einstecken eines Hochvoltgegensteckers 5.

In dem Gehäuse 2 befindet sich eine Leistungselektronik, die über den Hochvoltgegenstecker 5 mit einem Hochvoltverbraucher verbunden wird. Um ein Ausschalten der Leistungselektronik bei demontierter Abdeckung 3 sicherzustellen, umfasst die Hochvoltanordnung 1 eine Federvorrichtung 6.

Die Abdeckung 3 ist über ein Scharnier 7 mit dem Gehäuse 2 verbunden. Im gezeigten Zustand ist die Abdeckung 3 montiert. Bei einem Aufklappen der Abdeckung 3 über das Scharnier 7 wird von einem Demontieren der Abdeckung gesprochen.

Des Weiteren umfasst die Abdeckung 3 einen Bügel 8. Dieser Bügel 8 umgreift den Hochvoltgegenstecker 5. Solange der Hochvoltgegenstecker 5 im Hochvoltstecker 4 steckt, kann die Abdeckung 3 nicht demontiert werden, da der Bügel 8 durch den Hochvoltgegenstecker 5 blockiert ist.

Allerdings muss auch sichergestellt werden, dass der Hochvoltgegenstecker 5 nicht in den Hochvoltstecker 4 eingesteckt werden kann, solange die Abdeckung 3 nicht korrekt montiert ist.

Figur 2 zeigt die Hochvoltanordnung 1 mit demontierter Abdeckung 3 und abgezogenem Hochvoltgegenstecker 5. Wie Figur 2 gut zu entnehmen ist, umfasst die Federvorrichtung 6 zwei parallele erste Federelemente 10 und ein zweites Federelement 11, das sich zwischen den beiden ersten Federelementen 10 befindet. Die Federvorrichtung 6 ist vorzugsweise als Stanz-Biegeblechteil gefertigt.

Des Weiteren zeigt Figur 2 die Ausbildung des Scharniers 7. Dies umfasst eine gehäusefeste Öse 9, in die eine entsprechende Lippe der Abdeckung 3 einsteckbar ist.

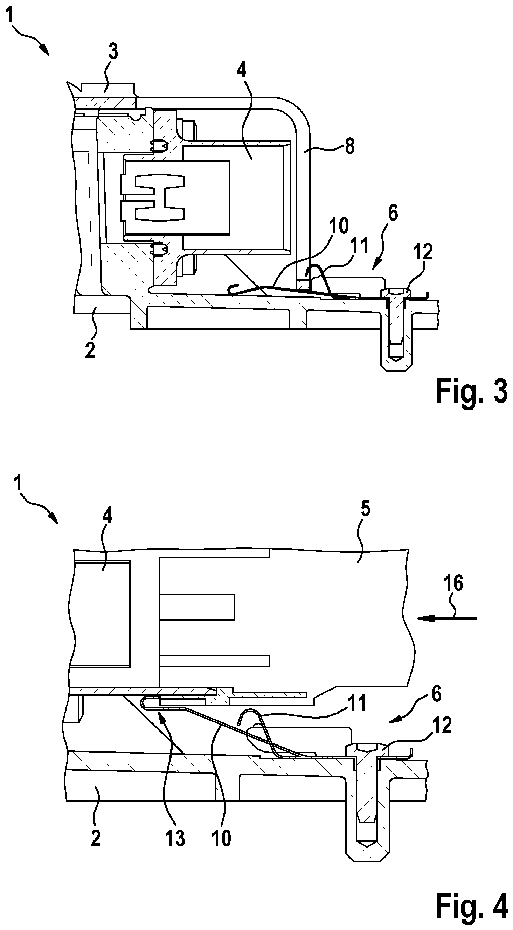

Figur 3 zeigt einen Schnitt durch die Hochvoltanordnung 1 mit montierter Abdeckung 3. Figur 4 zeigt ebenfalls einen Schnitt durch die Hochvoltanordnung 1, wobei in der Darstellung in Figur 4 die Abdeckung 3 nicht montiert ist und versucht wird, den Hochvoltgegenstecker 5 einzustecken.

Die ersten Federelemente 10 weisen an ihren freien Enden jeweils einen Haken 13 auf. Dieser Haken 13 ist U-förmig ausgestaltet. Bei demontierter Abdeckung 3, wie dies in Figur 4 gezeigt ist, verhindern die Haken 13 ein Einstecken des Hochvoltgegensteckers 5 in der Einsteckrichtung 16. Erst durch eine Montage der Abdeckung 3 werden die ersten Federelemente 10 mittels des Bügels 8 niedergedrückt. In diesem Zustand ist ein Einstecken des Hochvoltgegensteckers 5 möglich.

Figur 3 zeigt des Weiteren die Funktion des zweiten Federelementes 11. Das zweite Federelement 11 hält die montierte Abdeckung 3 nieder. Die Abdeckung 3 kann, selbst bei abgezogenem Hochvoltgegenstecker 5, erst demontiert bzw. geöffnet werden, wenn, beispielsweise per Hand, das zweite Federelement 11 betätigt wird. Diese Funktion stellt sicher, dass nach dem Abziehen des Hochvoltgegensteckers 5, eine gewisse Zeit, nämlich zum Betätigen des zweiten Federelementes 11, vergeht, bevor die Abdeckung 3 vollständig demontiert werden kann. Dadurch ist ausreichend Zeit gegeben, dass die Leistungselektronik ausgeschalten ist.

Des Weiteren zeigt Figur 3 eine Verschraubung 12 zum Befestigen der Federvorrichtung 6 am Gehäuse 2.

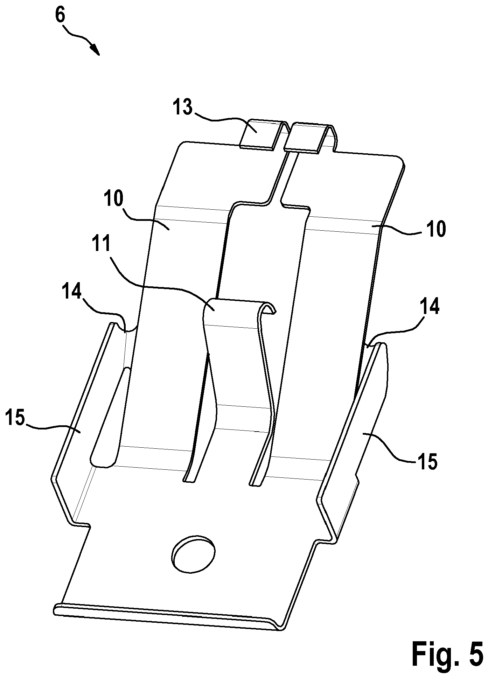

Figur 5 zeigt die Federvorrichtung 6 im Detail. Die Federvorrichtung 6 weist zwei Abstützwände 14 auf. Im montierten Zustand ist aufgrund der Abstützwände 14 die Abdeckung 3 entgegen der Einsteckrichtung 16 nicht bewegbar. Dadurch ist sichergestellt, dass die Abdeckung 3 nur aufgeklappt werden kann und nicht etwa aus der Öse 9 herausgezogen werden kann. Des Weiteren zeigt Figur 5 zwei seitliche Schutzwände 15 an der Federvorrichtung 6. Diese seitlichen Schutzwände 15 erschweren den Zugang zu den ersten Federelementen 10 und vermeiden somit eine Manipulation.

## Patentansprüche

1. Hochvoltanordnung (1), vorzugsweise für ein Kraftfahrzeug, umfassend
- ein Gehäuse (2),
- einen am Gehäuse (2) angeordneten Hochvoltstecker (4) zum Einstecken eines Hochvoltgegensteckers (5),
- eine am Gehäuse (2) montierbare und demontierbare Abdeckung (3), und
- eine Federvorrichtung (6) mit zumindest einem ersten Federelement (10), **dadurch gekennzeichnet dass** das erste Federelement (10) bei demontierter Abdeckung (3) ein Einstecken des Hochvoltgegensteckers (5) in den Hochvoltstecker (6) blockiert, und dass die montierte Abdeckung (3) das erste Federelement (10) niederdrückt, so dass der Hochvoltgegenstecker (5) in den Hochvoltstecker (4) einsteckbar ist.

2. Hochvoltanordnung nach Anspruch 1, **dadurch gekennzeichnet, dass** das erste Federelement (10) an einem freien Ende einen, vorzugsweise U-förmigen, Haken (13) zum Blockieren des Hochvoltgegensteckers (5) umfasst.

3. Hochvoltanordnung nach einem der vorhergehenden Ansprüche, **dadurch gekennzeichnet, dass** die Federvorrichtung (6) zumindest zwei erste Federelemente (10) umfasst, die unabhängig voneinander bewegbar sind.

4. Hochvoltanordnung nach einem der vorhergehenden Ansprüche, **dadurch gekennzeichnet, dass** die Federvorrichtung (6) zumindest ein zweites Federelement (11) umfasst, wobei das zweite Federelement (11) die montierte Abdeckung (3) blockiert, und die Abdeckung (3) nur durch eine Betätigung des zweiten Federelementes (11) demontierbar ist.

5. Hochvoltanordnung nach einem der vorhergehenden Ansprüche, **dadurch gekennzeichnet, dass** die Federvorrichtung (6) ein Stanz-Biegeblechteil ist.

6. Hochvoltanordnung nach einem der vorhergehenden Ansprüche, **dadurch gekennzeichnet, dass** der Hochvoltstecker (4) zum Einstecken des Hochvoltgegensteckers (5) in einer Einsteckrichtung (16) angeordnet ist, wobei die Federvorrichtung (6) zumindest eine Abstützwand (14) zum Blockieren einer Bewegung der montierten Abdeckung (3) entgegen der Einsteckrichtung (16) umfasst.

7. Hochvoltanordnung nach einem der vorhergehenden Ansprüche, **dadurch gekennzeichnet, dass** die Federvorrichtung (6) seitliche Schutzwände (15) umfasst, um eine Manipulation des ersten Federelementes (10) zu vermeiden.

8. Hochvoltanordnung nach einem der vorhergehenden Ansprüche, **dadurch gekennzeichnet, dass** die Abdeckung (3) einen den Hochvoltgegenstecker (5) umgreifenden Bügel (8) umfasst, wobei der Bügel (8) zum Niederdrücken des ersten Federelementes (10) angeordnet ist.

9. Hochvoltanordnung nach einem der vorhergehenden Ansprüche, **dadurch gekennzeichnet, dass** die Abdeckung (3) mittels eines Scharniers (7) mit dem Gehäuse (2) verbunden ist.

## Claims

1. High-voltage arrangement (1), preferably for a motor vehicle, comprising
- a housing (2),
- a high-voltage plug (4), which is arranged on the housing (2), for inserting a high-voltage mating plug (5),
- a cover (3) which can be fitted to and can be removed from the housing (2), and
- a spring apparatus (6) comprising at least one first spring element (10),
**characterized in that** the first spring element (10) blocks insertion of the high-voltage mating plug (5) into the high-voltage plug (6) with the cover (3) removed, and **in that** the fitted cover (3) pushes down the first spring element (10), so that the high-voltage mating plug (5) can be inserted into the high-voltage plug (4).

2. High-voltage arrangement according to Claim 1, **characterized in that** the first spring element (10) comprises a, preferably U-shaped, hook (13), for blocking the high-voltage mating plug (5), at a free end.

3. High-voltage arrangement according to either of the preceding claims, **characterized in that** the spring apparatus (6) comprises at least two first spring elements (10) which can be moved independently of one another.

4. High-voltage arrangement according to one of the preceding claims, **characterized in that** the spring apparatus (6) comprises at least one second spring element (11), wherein the second spring element (11) blocks the fitted cover (3), and the cover (3) can be removed only by operating the second spring element (11).

5. High-voltage arrangement according to one of the preceding claims, **characterized in that** the spring apparatus (6) is a stamped and bent sheet-metal part.

6. High-voltage arrangement as claimed in one of the preceding claims, **characterized in that** the high-voltage plug (4) is arranged for inserting the high-voltage mating plug (5) in an insertion direction (16), wherein the spring apparatus (6) comprises at least one supporting wall (14) for blocking a movement of the fitted cover (3) counter to the insertion direction (16).

7. High-voltage arrangement according to one of the preceding claims, **characterized in that** the spring apparatus (6) comprises lateral protective walls (15) in order to prevent manipulation of the first spring element (10).

8. High-voltage arrangement according to one of the preceding claims, **characterized in that** the cover (3) comprises a clip (8) which engages around the high-voltage mating plug (5), wherein the clip (8) is arranged for pushing down the first spring element (10).

9. High-voltage arrangement according to one of the preceding claims, **characterized in that** the cover (3) is connected to the housing (2) by means of a hinge (7).

## Revendications

1. Système à haute tension (1), de préférence pour un véhicule automobile, comprenant :
- un boîtier (2),
- un connecteur mâle à haute tension (4) disposé sur le boîtier (2) et destiné à l'introduction d'un connecteur mâle complémentaire à haute tension (5),
- un couvercle (3) pouvant être monté sur le boîtier (2) et en être démonté, et
- un dispositif à ressort (6) pourvu d'au moins un premier élément à ressort (10), **caractérisé en ce que** le premier élément à ressort (10), lorsque le couvercle (3) est démonté, empêche l'introduction du connecteur mâle complémentaire à haute tension (5) dans le connecteur mâle à haute tension (6), et **en ce que** le couvercle (3), une fois monté, abaisse le premier élément à ressort (10), de telle manière que le connecteur mâle complémentaire à haute tension (5) peut être introduit dans le connecteur mâle à haute tension (4).

2. Système à haute tension selon la revendication 1, **caractérisé en ce que** le premier élément à ressort (10) comprend, à une extrémité libre, un crochet (13) de préférence en U destiné à bloquer le connecteur mâle complémentaire à haute tension (5).

3. Système à haute tension selon l'une quelconque des revendications précédentes, **caractérisé en ce que** le dispositif à ressort (6) comprend au moins deux premiers éléments à ressort (10) qui sont mobiles indépendamment l'un de l'autre.

4. Système à haute tension selon l'une quelconque des revendications précédentes, **caractérisé en ce que** le dispositif à ressort (6) comprend au moins un second élément à ressort (11), dans lequel le second élément à ressort (11) bloque le couvercle (3), une fois monté, et le couvercle (3) ne peut être démonté que par un actionnement du second élément à ressort (11).

5. Système à haute tension selon l'une quelconque des revendications précédentes, **caractérisé en ce que** le dispositif à ressort (6) est une pièce en tôle estampée et coudée.

6. Système à haute tension selon l'une quelconque des revendications précédentes, **caractérisé en ce que** le connecteur mâle à haute tension (4) est disposé de manière à permettre l'enfichage du connecteur mâle complémentaire à haute tension (5) dans une direction d'enfichage (16), dans lequel le dispositif à ressort (6) comprend au moins une paroi de support (14) destinée à bloquer un mouvement du couvercle (3), une fois monté, dans une direction opposée à la direction d'enfichage (16).

7. Système à haute tension selon l'une quelconque des revendications précédentes, **caractérisé en ce que** le dispositif à ressort (6) comprend des parois de protection latérales (15) permettant d'éviter une manipulation du premier élément à ressort (10).

8. Système à haute tension selon l'une quelconque des revendications précédentes, **caractérisé en ce que** le couvercle (3) comprend une bride (8) enserrant le connecteur mâle complémentaire à haute tension (5), dans lequel la bride (8) est disposée de manière à abaisser le premier élément à ressort (10).

9. Système à haute tension selon l'une quelconque des revendications précédentes, **caractérisé en ce que** le couvercle (3) est relié au moyen d'une charnière (7) au boîtier (2).
